# EUROPEAN PATENT APPLICATION

(11) **EP 0 249 200 A2**
(43) Date of publication of application: **16.12.1987**
(21) Application number: 87108334.1
(22) Date of filing: 10.06.1987
(51) Int. Cl.: C09D 3/58, C08G 59/24, C09D 5/04

(54) **High solids sag resistant cycloaliphatic epoxy coatings**

(30) Priority: 10.06.1986 US 872392
(71) Applicant: UNION CARBIDE CORPORATION, Danbury Connecticut 06817 (US)
(72) Inventor: Kubisen, Steven J., North Brunswick New Jersey 08920 (US); Mazzariello, Enrico G., Sandy Hook Connecticut 06482 (US); Eaton, Robert F., Belle Mead New Jersey 08502 (US); Peacock, Glenn S., Greenville Pennsylvania 16125 (US)
(74) Representative: Wuesthoff, Franz, Dr.-Ing.

(57) **Abstract**

Sprayable, thermosetting, sag-resistant coating composition comprising at least 50 weight percent nonvolatiles comprising: (a) 100 weight parts of a crosslinkable cycloaliphatic epoxy containing at least one cycloaliphatic ring, (b) 0 to 300 weight parts of a crosslinking/chain-extending agent compatible with and capable of crosslinking and/or chain-extending said epoxy, and (c) a sag control system comprising, (1) 2 to 15 weight parts of an acrylic microgel, and (2) 5 to 35 weight parts of an organic polymer having a glass transition temperature of at least 25°C. Sag control compositions for controlling sag in cycloaliphatic epoxy coatings comprising: (a) an acrylic microgel, and (b) an organic polymer having a glass transition temperature of at least 25°C., in a weight ratio of said microgel to said polymer in the range from 1:4 to 4:1.

## Description

### BACKGROUND OF THE INVENTION

### 1. Field of the Invention

The present invention relates to flow control systems for reducing sag in cycloaliphatic epoxy coating compositions. More in particular, the present invention relates to flow control systems for cycloaliphatic epoxy coating compositions wherein acrylic microgels are combined with low to high molecular weight polymers having a glass transition temperature of at least 25⁰C.

### 2. Description of the Prior Art

The decline of the environment has spawned ever-increasing awareness concerning hazardous, toxic and polluting conditions. Statutes and regulations have been, and are now, being enacted to regulate, among other places, the industrial workplace. Emission controls apply not only to internal combustion engines and power plant exhaust stacks but to vapors being emitted by coating compositions as they are prepared, applied to substrates and subsequently cured. Emission controls have become increasingly more strict and in response, significant efforts have been directed to creating high solids coating compositions containing reduced amounts of non-reactive volatile diluents and unpolymerized volatile monomers.

New problems have arisen with the new generation of high solids coatings. This is especially true in high solids coating systems having prepolymer resins or resins which are crosslinked during the curing phase. Without the ability to use uncontrolled amounts of non-reactive volatile diluents, e.g., organic solvents, with the systems, viscosity control has become a major concern. Viscosity control is important far a number of coating application methods including air spray, airless spray, electrostatic spray, roll coating, dip coating and curtain coating. The high solids coating systems must be useful for such methods as air atomized/airless spray painting large vertical metal substrates. High solids coating compositions which are too viscous are not economically feasible as they can not be readily used in air atomized/airless sprayers. When high solids coating compositions have a viscosity which is compatible with methods for power spraying vertical metal substrates, too thick a coating of low viscosity material causes sagging. Sag resistance is a major problem with high solids coatings.

Sag is defined as the undesirable flow of the coating on vertical or near-vertical surfaces to produce films of unequal thickness. The phenomenon of sagging may be measured with each particular coating composition as sag resistance. Sag resistance is that thickness of coating upon a vertical surface which may be applied without that particular thickness sagging. Thus, a high solids coating composition must be of sufficiently low viscosity to be applied by power sprayers yet sufficiently sag-resistant to permit a reasonably thick coating upon a vertical metal substrate without sagging.

Increasingly strict emission controls have resulted in the development of high solids coatings such as those based on cycloaliphatic epoxide crosslinked or chain-extended with polyols. Such epoxy compositions are highly desirable for coating substrates because extremely durable coatings are achievable. Such epoxy compositions are very compatible with power spraying techniques as they have a very low viscosity; however, they may require heat to initiate crosslinking or chain extension with many available catalyst systems. Heating of the substrate and coating causes the viscosity of the coating to further decrease and the occurrence of the sag phenomenon to increase. Thus, the use of epoxy compositions as high solids coating compositions is very challenging because the heat-curing process exacerbates the sag phenomenon.

A common method used heretofore to control sag was to blend a small amount of a high molecular weight polymer in the coating compositions. The higher viscosity of the high molecular weight polymeric additive is often sufficient to control sag. At the same time the higher viscosity requires the addition of more solvent to thin to application viscosity which is undesirable because it promotes sag and defeats the purpose of high solids compositions which is to reduce the amount of volatiles emitted after application to the substrate. Typical high molecular weight polymers which can be used are the cellulose acetate butyrate resins, phenoxy resins, and the vinyl chloride-vinyl acetate copolymer or terpolymer resins.

Other types of additives heretofore used to control sag are silicas of various types. These generally reduce gloss to an undesirable level. Many other types of sag-control additives commercially available are based on derivatives of castor oil. All of those reported to have been tested were found to be incompatible with cycloaliphatic epoxides. Another type of sag-control additive is the acrylic microgel concentrate which is described as a dispersion of hydroxyl-containing acrylic microgel in a polymer solution. When these acrylic microgel additives are used in cycloaliphatic epoxide coatings, they impart no sag resistance at all.

U. S. - A - 4,522,958 and 4,526,910 describe high solids epoxy coating compositions using inorganic microparticles, e.g., silica, for sag control. The silica microparticles, it is taught, avoids having to use organic microgels to prevent sagging. _{U}. S. - A - 4,522,958 uses carbon-containing molecules, e.g., aliphatic alcohol radicals, chemically bonded to the inorganic microparticles at the surface of the microparticles. U. S. - A - 4,526,910 uses inorganic particles which are essentially free of carbon-containing molecules chemically bonded to the surface thereof.

U. S. - A - 4,290,932 and 4,377,661
have identical disclosures directed to solving sag problems in polymer coating systems by the addition of acrylic microgels which are stable dispersions of microparticles in an organic solvent, usually 0.05 to 10 µm in size and composed of a polymer crosslinked to the extent that it is insoluble in the organic solvent in which the particles are dispersed. It is taught that microgels allow for higher solids content in acrylic polymer coating compositions without raising viscosity. Pigment orientation is improved and sag resistance is controlled, it is taught, by carefully selecting a crosslinking agent which can cause the microgels to react with the acrylic coating composition.

U. S. - A - 4,540,734 teaches
controlling sag problems in polyurethane clearcoat compositions by adding a flow control system composed of urea thixotrope/acrylic microgel additives (e.g., a lightly crosslinked polymethyl methacrylate). Other microgels may be used, such as, polystyrene, polyethylene or polybutadiene microgels. This patent teaches that the microgels act as tie molecules by providing sites for attachment by secondary bonding associations of the clear coat system, wherein secondary bonding is between polyurethane resin, thixotrope and the microgel before the paint is cured. The solution to the sag problem taught by said patent is limited to polyurethane systems since the sag control system is designed to react specifically with hydroxy terminated urethane bonder resins.

_{U}. S. - A - 4,479,990 is an
improvement patent designed to improve upon the teaching of _{U}. S. - A - 4,102,851 . Here,
cycloaliphatic epoxides are used to coat the inside of conduits used for channeling sulfur hexafluoride gas to open circuit breakers to diminish arcing phenomenon and sag control in the coating is critical. The cycloaliphatic epoxy resin has a backbone structure which comprises two cycloaliphatic rings. Each cycloaliphatic ring has an epoxy oxygen connected to a pair of vicinal carbon atoms. To the cycloaliphatic epoxy resin is added a flexibilizing agent of polyazelaic polyanhydride or hexahydrophthalic anhydride and a filler material such as aluminum trihydrate or magnesite. The sag-resisting material, or thixotroping agent, is finely divided aluminum oxide, i.e., A1₂0₃.

U. S. - A - 4,539,348 and 4,546,014
teach stabilizing high solids film forming resins with water-swellable microgel polymer particles, e.g., made from a polymerizable carboxylic acid monomer, e.g., methacrylic acid, a difunctional crosslinking monomer, e.g., ethylene glycol dimethacrylate, and one or more carboxyl-free relatively, water-insoluble polymerizable vinyl monomer, e.g., alkyl acrylates. The microgel is prepared in advance and may be added to coating compositions, e.g., epoxy resin systems of the epihalohydrin-polyhydric phenol type, as a dry microgel powder or an aqueous suspension. Neither cycloaliphatic epoxy resins nor the sag problems associated therewith are disclosed or suggested by these patents.

Heretofore, a teaching was needed directed to solving sag problems with cycloaliphatic epoxy resin coating systems. Such coating systems are extremely high solids systems which are capable of forming durable coatings upon heat-curing, yet because of the low viscosity which becomes even lower during the heat-curing step, prohibitive sagging occurs. These cycloaliphatic epoxy coating systems are difficult to use because multiple thin coats are needed in order to build up to a coating 25 to 51 pm (1 to 2 mils) thick. What was needed was a sag control system for these cycloaliphatic epoxy resin coating systems which can maintain the coating viscosity within a range compatible with typical coating application techniques and in particular air atomized and airless spray, especially compressed air sprayers, and at the same time enable the application of a sufficiently thick coating upon a vertical substrate without sagging. Heretofore, no teaching existed in the prior art for such a sag control system.

### SUMMARY OF THE INVENTION

This invention is based on the unexpected discovery that the addition of both an acrylic microgel and a low to high molecular weight polymer having a glass transition temperature of at least 25°c to a cycloaliphatic epoxy coating composition can provide a sag resistance greater than that provided by the addition of an equivalent or greater amount of either the microgel or low to high molecular weight polymer alone at the same high solids content. The invention is also based on the discovery that cycloaliphatic epoxy coating compositions containing both an acrylic microgel and a low to high molecular weight polymer are characterized by equivalent or better sag resistances, than comparable compositions containing either the microgel or high molecular weight polymer alone and by lower viscosities than comparable compositions containing high molecular weight polymer alone.

This invention describes a way to improve the sag resistance of cycloaliphatic epoxy resin coatings without reducing the solids content. Heretofore, the control of sagging of these coatings before they cure was attempted by the addition of a high molecular weight polymer such as cellulose acetate butyrate, but only at the cost of increasing viscosity and requiring the addition of more solvent. It has now been found that the addition of blends of the high molecular weight polymer with an acrylic microgel can improve the sag resistance of the coating without the necessity of lowering solids content or causing film properties to change.

The coating compositions of this invention can be prepared as sprayable compositions at high solids, i.e., at least 50 weight % nonvolatiles and as high as 80 to 90 weight % nonvolatiles, and can be applied to vertical surfaces to provide coatings of substantial dry film thickness, e.g., 38 to 76 mm (1.5 to 3 mils) (dry) or more, which exhibit no sagging even when elevated cure temperatures, as high as 190°C or higher, are employed to cure the coating. The present invention also provides sag control compositions containing an acrylic microgel and a low to high molecular weight polymer for addition to cycloaliphatic epoxy coating compositions for the purpose of imparting sag resistance thereto.

The sag-resistant coating compositions of this invention are of sufficiently low viscosities, e.g., below 300 seconds (#4 Ford cup), as to be readily sprayable with conventional power spraying equipment and, nonetheless, provide applied coatings that exhibit unexpectedly high resistance to sagging induced by gravity. It is also possible by the present invention to provide cycloaliphatic epoxy coating compositions having extremely low viscosities, e.g., of 40 seconds (#4 Ford cup), thereby being useful for application by compressed air sprayers and, nonetheless providing applied coatings that are unexpectedly high in sag resistance.

The sag control additives of this invention contain a weight ratio of acrylic microgel to organic polymer in the range of 1:4 to 4:1, preferably, 1:1 to 1:3.

### DESCRIPTION OF THE INVENTION

According to the invention, sag or flow control for high solids coating compositions containing cycloaliphatic epoxy resins is effected by adding a sag or flow control system. It has been found that sag resistance may be increased in high solids cycloaliphatic epoxy coating compositions by adding to the compositions a mixture of an acrylic microgel and an organic polymer having a glass transition temperature of 25°C or more. The cycloaliphatic epoxy is self-crosslinking and self-chain-extending to a certain extent and the addition of a crosslinking and/or chain-extending agent, hereinafter called the crosslinking/chain-extending agent, further facilitates the crosslinking, and/or chain-extension, of the cycloaliphatic epoxy and in addition helps to control sag and can provide flexibilization. The crosslinking/chain extending of the cycloaliphatic epoxy coating composition can be accelerated by the addition of a suitable catalyst, such as, an onium salt and a suitable surfactant, e.g., a silicone surfactant, may be added for ease of preparation and application and to improve appearance.

The high solids, low viscosity, sprayable, sag-resistant, thermosetting coating compositions of this invention contain, on the basis of 100 weight parts of the crosslinkable/chain-extendable cycloaliphatic epoxy, 0 to 300, preferably 0 to 75, more preferably 0 to 50, and most preferably 25 to 40, weight parts of the suitable crosslinking/chain-extending (flexibilizing) agent compatible with the cycloaliphatic epoxy and capable of crosslinking and/or chain-extending the epoxy, and a sag control system comprising 2 to 15, preferably 5 to 10, weight parts of the acrylic microgel, and 5 to 35, preferably 7 to 30, weight parts of the organic polymer.

The cycloaliphatic epoxy resins useful in this invention possess at least one cycloaliphatic ring per molecule and those containing two cycloaliphatic rings to the molecule are preferred. An illustration of a preferred kind of cycloaliphatic epoxy resin suitable for use in practicing the present invention is that having the structure R-CO-0-CH₂-R wherein R is a cycloaliphatic ring, preferably but not necessarily a 6-membered aliphatic ring, having an epoxy oxygen atom connected to a pair of vicinal carbon atoms of each ring thereof, with a viscosity at 25°C of 200 to 450 mPa·s (cps.)and an epoxide equivalent weight of 126 to 140. The preferred cycloaliphatic epoxy is 3,4-epoxycyclohexylmethyl-3,4-epoxycyclohexylcarboxylate.

Another resin satisfactory for the practice of the invention is that having a backbone structure of 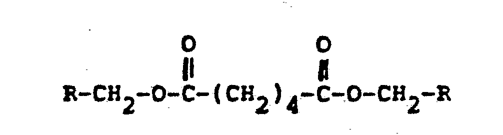 wherein _{R} is a 6-member cycloaliphatic ring having an epoxy oxygen connected to a pair of vicinal carbon atoms thereof, i.e., a 3,4-epoxy-cyclohexyl group, with an epoxide equivalent weight of about 190 to 210. Such resin is sold by Union Carbide Corporation under the mark "ERLA-4299".

Another cycloaliphatic epoxy that can be used has the formula: 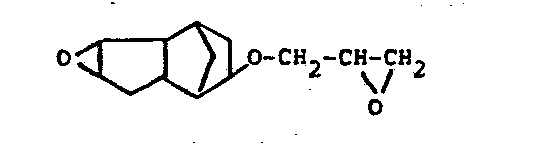 which may be designated 2,3-epoxy cyclopentane-4,-7-endomethylene cyclohexane-6-glycidyl ether. Other cycloaliphatic epoxy resins useful in this invention are diglycidyl tetrahydrophthalate, diglicidyl hexahydro- phthalate, bis(2,3-epoxycyclopentyl) ether and eipchlor hydrin-hydrogenated bisphenol A reaction products and the like. Mixtures of 2 or more of the cycloaliphatic epoxy materials such as those described above, or mixtures of one or more of the cycloaliphatic epoxy materials and a non-cycloaliphatic epoxy material, many of which are known in the art can be used.

The preferred chain-extending/crosslinking agents are polycaprolactone polyols which are described in detail in U. S. -A - 4,096,125 and polyester, polyether and polycarbonate polyols. -The polycaprolactone polyols are produced by catalytic polymerization of an excess of a caprolactone and an organic polyfunctional initiator having at least two reactive hydrogen atoms. The polyols used herein can be single compounds or mixtures of compounds. The method for producing the polycaprolactone polyols is well known and the organic functional initiators may be any polyhydroxyl compound as is shown in U. S. - A - 3,169,945.

Illustrative thereof are the diols such as ethylene glycol, diethylene glycol, triethylene glycol, 1,2-propylene glycol, dipropylene glycol, 1,3-propylene glycol, polyethylene glycol, polypropylene glycol, poly(oxyethylene-oxypropylene) glycols, and similar polyalkylene glycols, either blocked, capped or heteric, containing up to about 40 or more alkyleneoxy units in the molecule, 3-methyl-1,5-pentanediol, cyclohexanediol, 4,4'-methylene-bis-cyclohexanol, 4,4-isopropylidene biscyclohexanol, xylenediol,2-(4-hydroxymethylphenyl)-ethanol, 1,4-butanediol; triols such as glycerol, trimethylolpropane, 1,2,6-hexanetriol, triethanolamine, triisopropanolamine, and the like, tetrols, such as erythritol, pentaerythritol, and N,N,N',N'- tetrakis(2-hydroxyethyl)ethylene diamine.

When the polyol is reacted with the caprolactone a reaction occurs that can be presented in its simplest form by the equation:

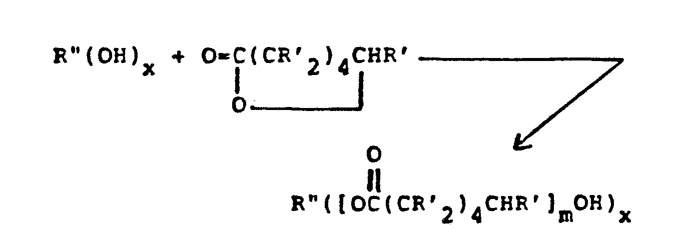

In this equation, m is a number representing the average number of repeating caprolactone derived units, x is an integer designating the number of hydroxyl groups in the polyol.reactant, and R' is an alkyl, alkoxy, aryl, cycloalkyl, alkaryl or aralkyl group having up to 12 carbon atoms and at least 6 of the R' groups in the caprolactone molecule are hydrogen atoms. The polycaprolactone polyols that can be used in this invention are shown by the formula on the right hand side of the equation; they can have an average molecular weight of from 290 to 6,000. The preferred polycaprolactone polyol compounds are those having an average molecular weight of from 290 to 3,000, more preferably from 300 to 1,000. The preferred polycaprolactone polyol-crosslinking/chain-extending agents are the polycaprolactone diol compounds having an average molecular weight of from 290 to 500 and the polycaprolactone triol compounds having an average molecular weight of from 300 to 1,000; these being preferred because of their low viscosity properties. The hydroxyl number of the polycaprolactone polyol can be from 15 to 600, preferably from 200 to 500; and the polycaprolactone polyol can have an average of from 2 to 6, preferably 2 to 4, hydroxyl groups.

Illustrative of polycaprolactone polyols that can be used as chain extension/crosslinking agents in this invention there can be mentioned the reaction products of a polyhydroxyl compound having an average of from 2 to 6 hydroxyl groups and the caprolactone. In the following table there are listed illustrative polycaprolactone polyols useful as crosslinking/ chain-extending agents in this invention. The first column lists the organic functional initiator that is reacted with the caprolactone and the average molecular weight of the polycaprolactone polyol is shown in the second column. Knowing the molecular weights of the initiator and of the polycaprolactone polyol one can readily determine the average number of molecules of caprolactone (CPL Units) that reacted to produce the compound; this figure is shown in the third column.

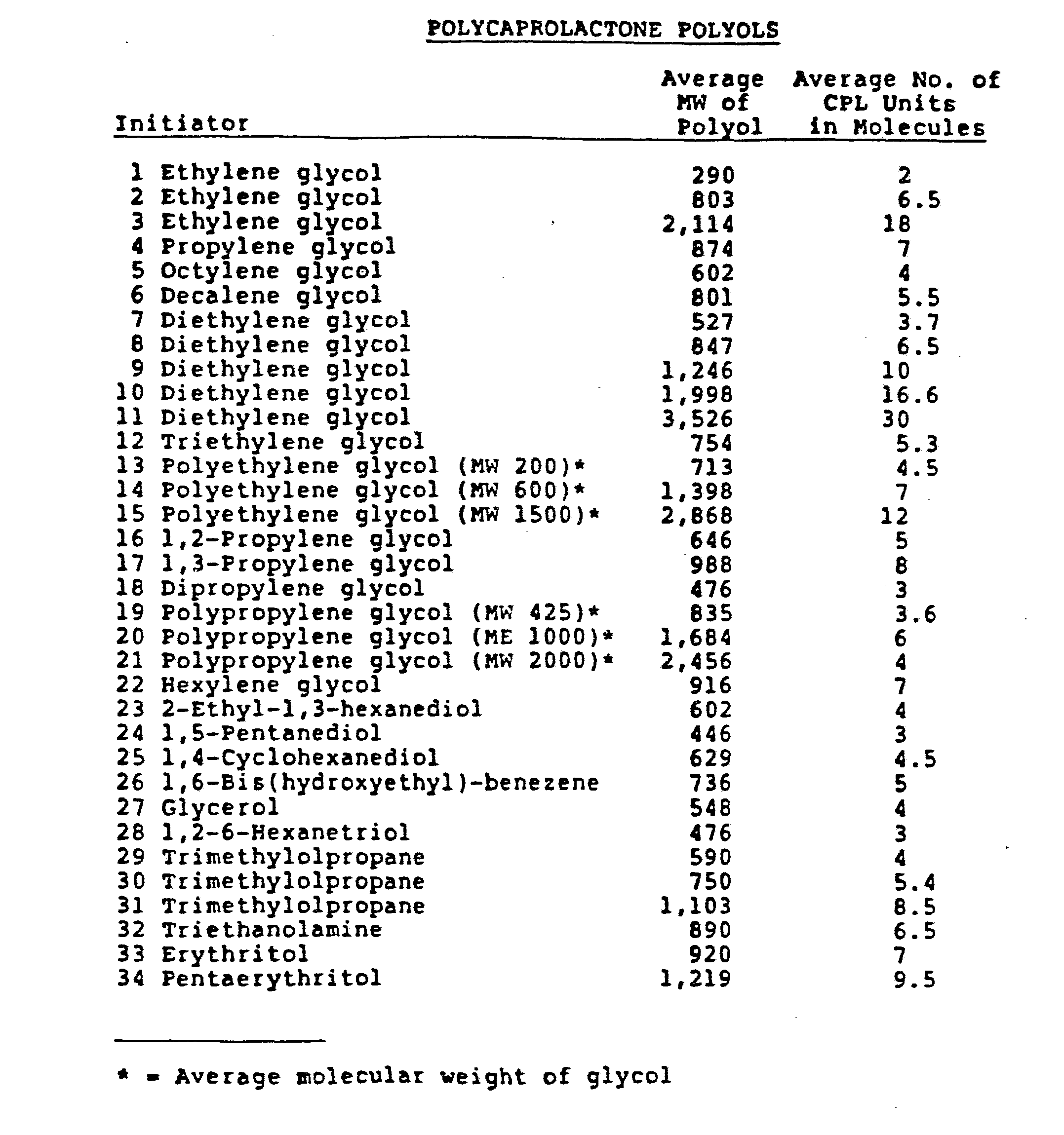

The preferred crosslinking/chain-extending agent is a polycaprolactone triol having an average molecular weight of about 900 and an average hydroxyl number of 187.

The sag control system of the present invention is a mixture of an acrylic microgel and an organic polymer. Acrylic microgels and the method of making same are described in U. s. - A - 4,298,932 and 4,377,661.

While the acrylic microgel additives have been designed to be used primarily with alkyd, polyester, polyurethane and/or acrylic coatings, it has been found that when these microgels are added to coating compositions containing cycloaliphatic epoxy resins and crosslinkers/chain-extenders such as trifunctional polyols no improvement in sag resistance occurs.

The microgel additive can be prepared by first making an aqueous emulsion of an acrylic resin which is crosslinked with a multifunctional (e.g., having a functionality of 2 or more) crosslinking agent and then dehydrating the system by azeotropically distilling off the water in the emulsion. The resulting, very fine, crosslinked resin particles can then be added to acrylic paint resin in an organic solvent solution as an emulsion. Alternatively, the microgel emulsion can be dehydrated simultaneously with the preparation or cooking of the acrylic paint resin. Thus, the microgel emulsion may be mixed with the preformed paint resin in organic solvent solution and then azeotropically distilled to remove the water from the microgel emulsion. The acrylic microgels useful in this invention are made up of two essential components which may be called the acrylic microgel emulsion and the acrylic resin.

The microgel emulsion is prepared by the emulsion polymerization in water of a mixture of ethylenically unsaturated monomers, preferably including at least one such monomer which contains a -COOH or -OH group such as acrylic acid, methacrylic acid, and other such reactants described in U. S. - A - 4,290,932 and at least one such monomer which is free from -COOH and -OH groups, such as butyl acrylate, methyl methacrylate and other such reactants described in said patent, and a multifunctional crosslinking agent, such as, divinyl benzene and other such common reactants.

The amount of ethylenically unsaturated monomers used to make up the microgel can be widely varied. Typical amounts will fall in the range of 10% to 90% by weight of monomer or monomers containing -OH or -COOH groups and 90% to 10% by weight of monomer or monomers which are free from such groups. The amount of crosslinking agent that is used is important although this can be varied over a relatively large range. Desirably the amount of crosslinking agent constitutes at least 0.5% and up to 20% by weight of the total amount of all materials used for the emulsion polymerization. In the normal situation this is roughly equivalent to a range of 5% to 70%, preferably 8% to 50%, by weight of the total weight of ethylenically unsaturated monomers and crosslinking agent.

Suitable emulsifiers or surfactants, initiators and reaction conditions for the production of the acrylic emulsions and suitable initiators, solvents, and reaction conditions for the solution polymerization producing the acrylic resin are disclosed in US - A - 4,290,932.

A preferred acrylic microgel contains highly crosslinked acrylic polymeric particles, each particle being approximately 0.05-0.20 µm in diameter. The microgel particles are supplied in either a water suspension or a non-aqueous suspension blended with a solution polymer. The solution polymer (non-aqueous) is preferred and optionally may be either a hydroxy functional acrylic or polyester resin. The organic solvent for the non-aqueous microgels that are commercially available is either n-butanol, methyl amyl ketone or a blend of the two. The acrylic microgel particle is a high density insoluble particle designed for sag control in high solids acrylic systems. The microgel is used to control sagging and appearance problems in high solid colored coatings and improve aluminum flake orientation in metallics. The mechanism for correcting these defects is reported to be through hydrogen bonding of the microgel particles.

The acrylic microgel particle is considered to be a sphere with pendant hydroxyl groups protruding from the surface. The microgel particle, when dispersed in an organic solvent still retains its normal shape and its bonding characteristics due to its highly crosslinked structure; whereas the hydroxyl groups of an emulsion without a highly crosslinked structure will rotate to the inside of the particle when the particle is placed in an organic solvent.

Acrylic microgels are commercially available from Cook Paint and Varnish Company, Kansas City, Missouri, under the following designations and descriptions:

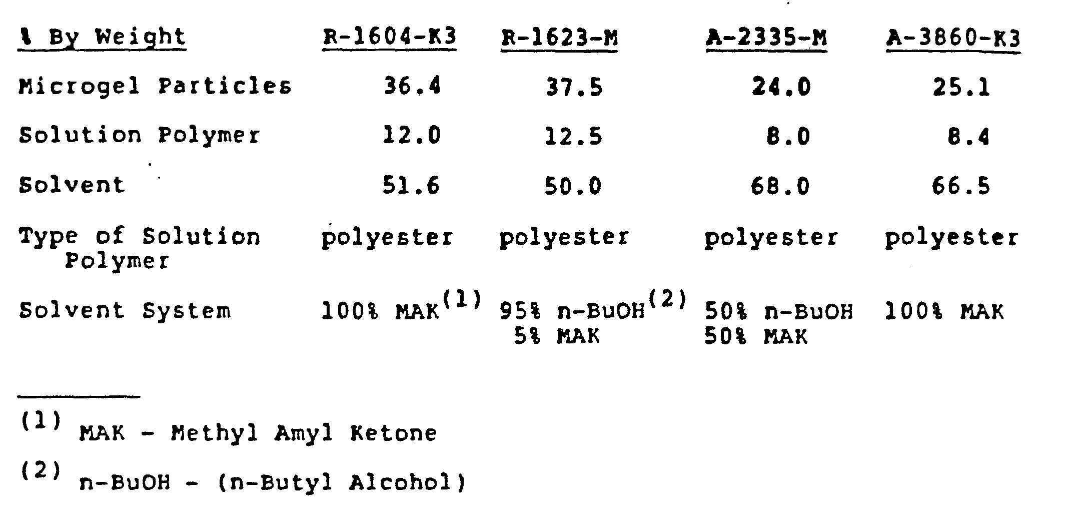

The sag control system of the present invention is composed of two components, one of which is the above-described acrylic microgel, the other of which is an organic polymer which may be any organic polymer (1) that is not incompatible with the cycloaliphatic epoxy, crosslinking/chain-extending agent or the acrylic microgel, (2) that has a glass transition temperature (Tg) of at least 25°C, preferably at least 30⁰C, more preferably from 30°C to 125°C, and (3) that has a molecular weight of at least 250, preferably at least 3000, but not so high a Tg or molecular weight that solutions or dispersions containing the polymer, as in the coating compositions, are too viscous for application to and for flowing onto a substrate or are too viscous for spraying onto a substrate. The molecular weight of suitable organic polymers can range from 1000 to 35000, preferably 3000 to 25000, and the glass transition temperature can range from 25°C to 250°C, preferably 30°C to 125°C. Suitable polymers include the alkanoic acid esters, or alkanoic acid mixed esters of cellulose, such as the cellulose acetate butyrate esters, i.e., CAB. The cellulose backbone of this polymer has attached thereto by esterification, alternating acetate and butyrate groups.

In the presence of acetic anhydride, acetic acid, and a little sulfuric acid, cellulose can be converted into the triacetate. Partial hydrolysis removes some of the acetate groups, degrades the chains to smaller fragments (of 200-300 units each), and yields the important cellulose acetate (roughly a diacetate). Upon removal of some of the acetate groups from the cellulose, the material may then be subjected to similar esterification procedures to add on butyrate groups. That is to say, in the presence of butyric anhydride, butyric acid, and a little sulfuric acid, the cellulose acetate may be converted into cellulose acetate butyrate. Or, the mixed ester may be made in one process by treating fibrous cellulose with butyric acid and butyric anhydride as well as acetic acid and acetic anhydride in the presence of sulfuric acid. Cellulose acetate butyrates and other alkanoic acid esters or mixed esters of cellulose are commercially available, for example, from Eastman Chemical Products, Inc., Kingsport, Tennessee 37662.

A particularly suitable organic polymer for use in this invention has been found to be cellulose acetate butyrate sold by Eastman Kodak Products as CAB-551-0.2. This CAB has a viscosity of 0.2 s or 76 mPa.s (0.76 poise) as measured according to the method of ASTM D817 (formula A) and D1343. The acyl content is 2 wt. % acetyl and 52 wt. % butyryl, as measured according to ASTM D817. The hydroxyl content of the CAB is 1.8% and it has a melting range of 130 to 140°C. The number average molecular weight and Tg of CAB-551-0.2 are 30,000 and 101°C, respectively.

Another suitable polymer is CAB-551-0.01 which has an acetyl content of 2 wt. %, a butyryl content of 53 wt. %, a hydroxyl content of 1.5 wt. %, a viscosity of 0.01 seconds, a melting range of 110-125°C, a Tg of 85°C and a number average molecular weight of 16,000.

Other suitable polymers are the cellulose acetate propionate polymers such as CAP-504-0.2 (Eastman) having a viscosity of 0.2 seconds, an acetyl content of 2.5 wt. %, a butyryl content of 40 wt. %, a hydroxyl content of 5.0 wt. %, a Tg of 159°C and a number average molecular weight of 15,000.

Other polymers which are useful in the practice of this invention are the high molecular weight thermoplastic resins that combine the application and handling characteristics of a thermoplastic with many of the outstanding physical and chemical properties of a thermosetting resin. Phenoxy resins are made by reacting bisphenol-A and epichlorohydrin to produce a basic chemical structure similar to that of the epoxy resins without the epoxy groups. The phenoxy resins are a separate and unique resin class. The formula for the phenoxy polymers is: 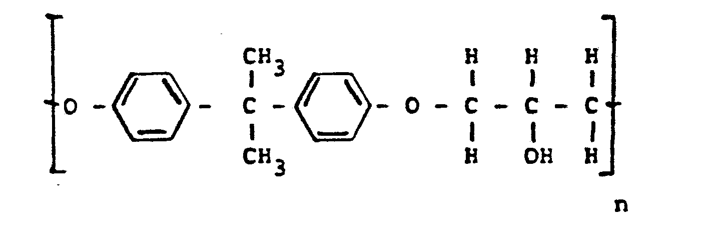 wherein n is a number of 82-123. Phenoxy resins are tough and ductile thermoplastics. Molecular weights of the grades available range from 25,000 to 35,000. The phenoxy resins do not have terminal, highly reactive epoxy groups and are thermally stable materials with long shelf lives. The resins may be used in adhesives and coatings without further chemical conversion. They require no catalyst, curing agents, or hardeners to be useful products. Suitable products may be obtained commercially from Union Carbide Corporation under the trademark Bakelite Phenoxy.

There can also be used, as the organic polymer constituent, vinyl polymers having a Tg ranging from 25⁰_{C} up to the _{T}g at which the vinyl polymer renders the coating composition, in which it is contained, too viscous for application to and flowing on a substrate or are too viscous for spraying. The number average molecular weights of suitable vinyl polymers range from 2,000, preferably 3,000, up to 30,000, preferably 25,000, or up to the maximum number average molecular weight at which coating compositions containing same can be applied to and flow on the substrate to be coated or can be applied by spraying.

Copolymers of vinyl acetate and vinyl chloride are also useful in this invention to reduce sag in cycloaliphatic epoxy coating compositions. Preferably, the vinyl copolymers can have an average molecular weight of 4,000 to 35,000, the polymerized vinyl chloride content of the polymers may range preferably from about 67 wt. % to about 90 wt. t and the polymerized vinyl acetate content ranges from 10 wt. t to 33 wt. %, preferably, 4 wt. % to 14 wt. t, and can contain other polymerized vinyl monomers. Additionally, the vinyl copolymers could have a hydroxyl content of 2% to 3.5%. Technically, these polymers can be considered to be terpolymers of vinyl chloride, vinyl acetate and vinyl alcohol, or other hydroxy-containing monomer, with the hydroxyls being carried on vinyl constituents.

Suitable vinyl copolymers are available commercially from Union Carbide Corporation under the designations UCAR Solution Vinyl Resins, VAGH, VAGD, VROH, VYES, VMCH, VMCC, VMCA, VYHH, VYHD, VYLF and VYNS-3.

One well known method for making the vinyl copolymers (although this is not the only method for producing vinyl copolymers useful in this invention) is to polymerize a heterogeneous mixture of substituted ethylenes, i.e., the vinyl monomer, such as, vinyl chloride and vinyl acetate, using an initiator such as a peroxide. The peroxide functions by breaking down to form a free radical. This free radical adds to a molecule of vinyl monomer and in doing so generates another free radical. This free radical adds to still another molecule of vinyl monomer to generate a still larger radical which, in turn, adds to another molecule of vinyl monomer and so on. Eventually the chain is terminated by steps, such as the union of two radicals, that consume but do not generate radicals. This is known as chain-reaction polymerization but it is also conceivable that chain-reaction polymerization may proceed, not by way of free radicals, but by way of organic ions, or within the coordination sphere of a transition metal complex.

The cycloaliphatic epoxy coating compositions of this invention have nonvolatile contents of 50 wt. % or more, preferably 80 wt. t or more. The novel coating compositions contain one or more liquid organic solvents which of course are present in amounts up to 50 wt. 4, preferably 20 wt. %. The term "organic solvent" is employed in a broad sense and is intended to include true solvents as well as liquid diluents for the crosslinkable/chain-extendable cycloaliphatic epoxy resins and optional crosslinking/chain-extending agent which may not be true solvents but are miscible with and provide a diluent and vehicle for epoxy resin and optional crosslinking/chain-extending agent. The solvent system employed in this invention generally is organic. It may be a single compound or a mixture of compounds. When the solvent system contains more than one organic liquid solvent, such solvents can be selected from fast, medium speed and slow solvents in order to provide the desired drying properties to the novel coating composition. The relationship between the solvent system and the crosslinkable/chain-extendable cycloaliphatic aliphatic epoxy depends upon the absolute and relative natures of these materials and upon the relative amounts used. Such factors as solubility, miscibility, polarity, hydrophilicity, hydrophobicity, lyophilicity and lyophobicity are some of the factors which may be considered. Illustrative of suitable components of the solvent system which may be employed are alcohols such as lower alkanols containing 1 to 8 carbon atoms including methanol, ethanol, propanol, isopropanol, butanol, sec-butyl alcohol, tert-butyl alcohol, amyl alcohol, hexyl alcohol, cyclohexanol and 2-ethylhexyl alcohol; ethers and ether alcohols such as diethyl ether, ethylene glycol monoethyl ether, ethylene glycol monobutyl ether, ethylene glycol dibutyl ether, propylene glycol monomethyl ether, diethylene glycol monobutyl ether, diethylene glycol dibutyl ether, dipropylene glycol monoethyl ether, and dipropylene glycol monobutyl ether; ether esters, glycol ether esters; ketones such as acetone, diisobutyl ketone, methyl ethyl ketone, methyl isobutyl ketone, methyl amyl ketone and methyl _{N}-butyl ketone; esters such as butyl acetate, hydroxyethyl acetate, 2-ethoxyethyl acetate and 2-ethylhexyl acetate, aliphatic and alicyclic hydrocarbons such as the various petroleum naphthas and cyclohexane, aromatic hydrocarbons such as toluene and xylene.

The amount of organic solvent present in the inventive coating solution can be 50 wt. % or less, preferably,
20 wt. % or less, based on the total weight of the composition. As discussed above, a unique feature of the coating composition of this invention is the ability to formulate coating compositions containing smaller amounts of organic solvent than conventional solutions or dispersions of film-forming resins. It is most preferred therefore that the organic solvent be used in as small quantities as possible, i.e, that amount just sufficient to dissolve or disperse the film-forming resin or provide sufficient fluidity to the composition to enable reasonably facile application of the composition to form a coating on a substrate.

In addition to the above-described ingredients for the cycloaliphatic epoxy coating compositions of this invention, other ingredients may be desirable such as catalysts to accelerate curing, i.e, crosslinking/ chain-extension, and surfactants for ease of preparation and application of the novel coating compositions. A preferred catalyst for the inventive coating compositions is diethylammoniumtriflate having the formula: 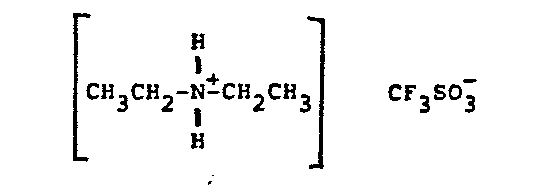 The Minnesota Mining and Manufacturing Corporation is a commercial supplier of this catalyst which is marketed under the proprietary designation FC-520. Any other suitable catalyst can be used, including other triflic acid salts, onium salts, boron trifluoride and other Lewis acid catalysts.

The preferred surfactant is polyalkyleneoxide- polymethylsiloxane copolymer which is a silicone surfactant. It has a boiling point in excess of 150°Cat (bar)atmospheric pressure, a freezing point of less than 0°C., a specific gravity of 1.038 at 25⁰C., a vapor pressure at 23°C of less than 1.33 mbar (1 mm) of mercury. Its vapor density is greater than 1 and its solubility in water is complete. It is a clear, amber liquid which has a mild polyether odor. This copolymer surfactant is a mixture of 80 wt. % polyalkyleneoxide-polymethyl- siloxane copolymer and 20% ethylene glycol and is available from Union Carbide Corporation as Union Carbide Silicone Surfactant L-5410. Any other surfactant, of which there are many, that is not incompatible with any of the ingredients of the novel coating compositions can be used in place of Silicone Surfactant L-5410.

The coating compositions of this invention can contain other ingredients such as participating reaction accelerators, fireproofing agents, flame-retardants, coloring agents, dyes, pigments, fillers, or any other materials for providing special effects. The types and relative amounts of such materials for providing said special effects are well known.

The coating compositions of this invention are made by simply mixing all the ingredients at room temperature, whereupon the coating composition is ready for application to a substrate. It is preferred, however, to mix the cycloaliphatic epoxy and crosslinking/chain-extending agent. A solution of the organic polymer in an organic liquid or diluent is prepared, e.g., to produce a 40 wt. % nonvolatile solution, which is then mixed with the acrylic microgel dispersion. The resulting mixture of organic polymer, acrylic microgel and solvent is then mixed with the cycloaliphatic epoxy-crosslinking/chain-extending agent mixture and agitated to produce a uniform coating composition. The catalyst, surfactant and any other additives can be introduced into the composition or its ingredients at any stage. Two package systems can also be utilized for lower temperature and ambient cure coatings.

The inventive coatina compositions can be applied to the substrate in any convenient way. For example, the
coating compositions can be brushed, rolled or sprayed onto the substrate or the substrate can be dipped into the coating compositions, which are also suited for compressed air spraying or airless power spraying.

Once applied to a substrate, heat is usually used to initiate crosslinking/chain-extension of the coating compositions into hard, durable, fully cured coatings. Heating times and temperatures can be widely varied. For example, curing temperatures of 50°C to 260°C., preferably 80°C. to 150°C. are useful. Curing times can be widely varied and typically range from

10 minutes at the temperatures in the upper end of the range to 30 minutes or an hour or more at the lower temperatures in the range.

The following examples are presented. Numbered examples typify the invention while lettered examples do not and are presented for comparative purposes. In the examples, "N.V." designates "nonvolatiles", "Tg" designates glass transition temperature, "wt. %" designates percent by weight
unless otherwise designated. In Examples A, B, C, E, G and H additional xylene solvent was added in the amounts shown in Tables I, II and III in order to reduce the nonvolatiles content to 80 percent for comparison with the other examples at about this level of nonvolatiles content.

In the examples the following designations are used to identify the materials described below:
Epoxy Resin: 3,4-epoxycyclohexylmethyl 3,4-epoxycyclohexanecarboxylate.
Crosslinking Agent: polycaprolactone triol having a number average molecular weight of 900 and an average hydroxyl number of 187 functioning as a crosslinking and/or chain-extending agent. (Tone 0310 sold by Union Carbide Corporation).
CAB: cellulose acetate butyrate containing: 2 wt. % acetyl groups and 52 wt. % butyryl groups (ASTM D817) and having a number average molecular weight of 30,000 and a glass transition temperature, Tg, of lOl^{o}C. (CAB-551-0.2 sold by Eastman Kodak Company).
Phenoxy: phenoxy resin made from bisphenol A and epichlorhydrin and having a number avetage molecular weight of about 35,000, a Tg of 100°C and repeating units of the formula: 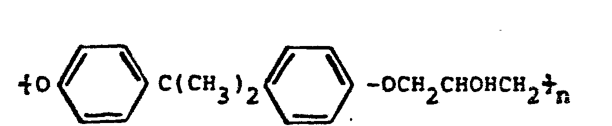 wherein n is about 123. (PKHH sold by Union Carbide Corporation).
VYES: terpolymer of 67 wt. % vinyl chloride, 11 wt. % vinyl acetate and hydroxyl-containing monomer to provide 3 wt. % hydroxyl group and having a number average molecular weight of 4000 and a Tg of 40°C. (UCAR Solution Vinyl Resin VYES).
VROH: terpolymer of 81 wt. % vinyl chloride, 4 wt. % vinyl acetate and hydroxyl-containing monomer to provide 2 wt. % hydroxyl groups and having a number average molecular weight of 8000 and a Tg of 55°C. (UCAR Solution Vinyl Resin VROH).
VAGH: terpolymer of 90 wt. % vinyl chloride, 4 wt. % vinyl acetate and hydroxyl-containing monomer to provide 2.3 wt. % hydroxyl groups and having a number average molecular weight of 23000 and a Tg of 79°_{C}. (UCAR Solution Vinyl Resin VAGH).
Microgel: 25.1 wt. % of highly crosslinked acrylic polymeric particles approximately 0.05 to 0.2 pm in diameter blended with 8.4 wt. % of a hydroxy functional acrylic solution polymer and suspended in 66.5 wt. % of methyl amyl ketone. (A-3860-K3 sold by Cook Paint and Varnish Company).
Catalyst: diethylammoniumtriflate having the formula: 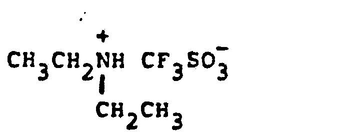 (_{F}C-520 sold by 3M).
Surfactant: poly(alkyleneoxide-methylsiloxane), 80 wt. %, and ethylene glycol, 20 wt. %. (Union Carbide Silicone Surfactant L-5410).

In the examples the following measurements and tests were performed in the manner described below:
Viscosity: The viscosity measurements were performed using a No. 4 Ford cup which is a cup with a hole in the bottom. Material to be measured was added to the cup and the period of time it takes for the material to drain through the hole was measured in seconds. The Ford cup rating in seconds is roughly comparable to centipoise by multiplying the Ford rating by 3.5. The higher drainage times indicate higher viscosities.
Sag Resistance: Sag resistance was measured with a Leneta sag bar. Leneta bars provided with gaps having increasing ratings (mils or pm) may be used on the coated surface to determine the widest gap which does not result in sagging of the coating. Measurements were made after a specified period of heating at a specified temperature. The higher sag resistance ratings designate the better sag resistance.
MEK Rubs: MEK Rubs is a semi-quantitative test which was performed by manually rubbing a cloth soaked with methyl ethyl ketone across the surface of the cured coated structure while applying moderate pressure. One MEK Rub consisted of one back-and-forth motion across the surface. Greater than 100 rubs without the appearance of the coating upon the rag is considered an adequate coating.
Hardness: The coating hardness test is a quantitative test for determining resilience and hardness of the coating. Essentially a rocking device called a Sward hardness device was set in motion upon the coated surface and the degree of motion-damping which the coated surface contributes to the rocking motion of the device is the measure of hardness. The measurements given in Table I through III are the Sward Hardness Ratings, the higher the number, the harder is the coating.
Mandrel Bend: The mandrel bend test is a test designed to determine the flexibility of the coating. The mandrel is a rod having a diameter around which was bent a substrate having coated thereon the cured coating being tested. The rating given each coating in Tables I through III below is the smallest diameter in mm (inches) around which the coating and substrate at 0°C. could be bent and not exhibit cracking or flaking of the coating. The lower numbers indicate more flexible coatings.

### Examples I and A-F

In each example the epoxy resin and crosslinking agent were mixed in the proportions given in Table I to provide a uniform mixture. In Examples 1, B, C and D the CAB high molecular weight polymer was dissolved in methyl ethyl ketone to produce a solution containing 40% nonvolatiles. In Examples B, C and D the CAB solution was mixed with the epoxy resin-crosslinking agent mixture. In Examples E and F the microgel suspension was mixed with the epoxy resin-erosslinking agent mixture. In Example 1, both the CAB solution and microgel suspension were mixed with the epoxy resin-crosslinking agent mixture. No microgel or CAB solution was mixed with the epoxy resin-crosslinking agent in Example A. The proportions of each ingredient in each example are given in Table I. In addition, 0.4 wt. % of diethylammonium triflate catalyst and 0.2 wt. % silicone surfactant (both identified above) were added to the mixture of each example and the resulting coating compositions were made uniform by stirring. In Examples A, B, C and E the amounts of xylene respectively shown in Table I were added to reduce the nonvolatile content of the mixtures of those examples to 80%.

The viscosity and sag resistance of the coating composition of each example were measured and are respectively given in Table I. In measuring sag resistance, each coating was applied in different thicknesses to a 51 mm (20 mil) thick aluminum panel by drawing down with a Leneta bar. After application and drawing down, each coated panel was allowed to sit horizontally for about 10 minutes at room temperature and then placed vertically in an oven where it was maintained at 190⁰C for 10 minutes.

Thereafter, additional amounts of each coating composition were applied to aluminum panels which were maintained at 121°C for 15 minutes in an oven. The film properties of the cured coatings were measured, and the results are listed.in Table I.

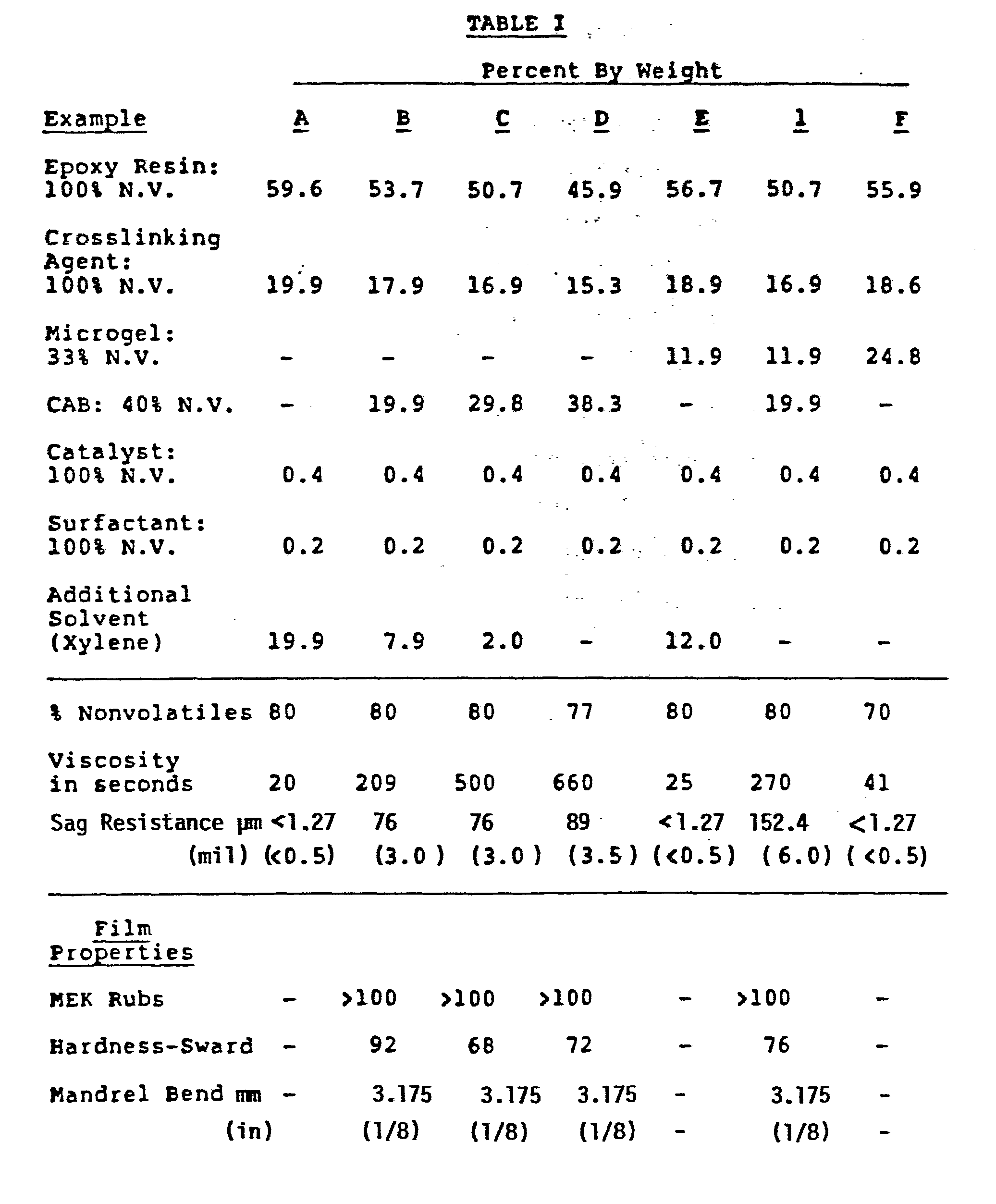

Table I shows the synergistic results of blending the microgel with cellulose acetate butyrate, i.e., CAB. While the viscosities of Examples A, E and F are very low, e.g., 20, 25, and 41, respectively, the sag resistance of each of these examples is less than 0.5 which is considered to be little or no sag resistance and thus unacceptable. This is to be expected in Examples E and F since the acrylic microgels used were not designed primarily epoxy systems. Examples C and D are similar to Example A with the sole additional ingredient of cellulose acetate butyrate. The compositions of Examples C and D showed improved sag resistance, but have much higher viscosities rendering them very difficult, if not impossible, to apply, without further dilution, using power sprayers.

Example 1 shows the synergistic effect of the presence of cellulose acetate butyrate and the acrylic microgel in that there is definitely improved sag resistance and about the same viscosity as in the case when cellulose acetate butyrate is used alone at the same concentration, i.e., compare Example 1 with Example B. Examples E and F illustrate the ineffectiveness of the microgel alone to improve sag resistance. When used with a high molecular weight polymer, e.g., CAB, the microgel, as shown in Example 1, substantially doubles the sag resistance with little, if any, increase in viscosity over the case where the same proportion of CAB is used without the microgel as shown by Example B.

### Examples 2, 3 and G

In each example, the epoxy resin and crosslinking agent were mixed in the proportions given in Table II to provide a uniform mixture. In Examples 2, 3 and G, the phenoxy high molecular weight polymer was dissolved in methyl ethyl ketone to produce a solution containing 40% nonvolatiles. The resulting phenoxy resin solution and the above-identified microgel were mixed with the epoxy resin-crosslinking agent mixture in the respective proportions given in Table II. In addition, the catalyst, surfactant and, in the case of Example G, additional solvent were added to the resulting mixtures in the proportions set forth in Table II. Thereafter, the mixture was blended to provide a uniform coating composition. The nonvolatile content of each of the mixtures was 80%.

The viscosity and sag resistance of the coating composition of each example were measured and are respectively presented in Table II. In carrying out the sag resistance tests, the coating compositions of each of the examples was applied to an aluminum panel which was about 51 µm (20 mils) in thickness using a Leneta bar. Each panel was coated with different thicknesses of each coating composition and was kept in a horizontal position for 10 minutes at ambient temperature and then placed in a vertical position in an oven where it was kept at 190°C for 10 minutes. Each panel was inspected for sag and the thickest sag-free coating for each composition was recorded and is presented in Table II. In addition, each coating was applied to an aluminum panel in approximately the same thicknesses in each case and was baked for 20 minutes at 121°C. Thereafter, the film properties of each cured coating were measured and the results are presented in Table II.

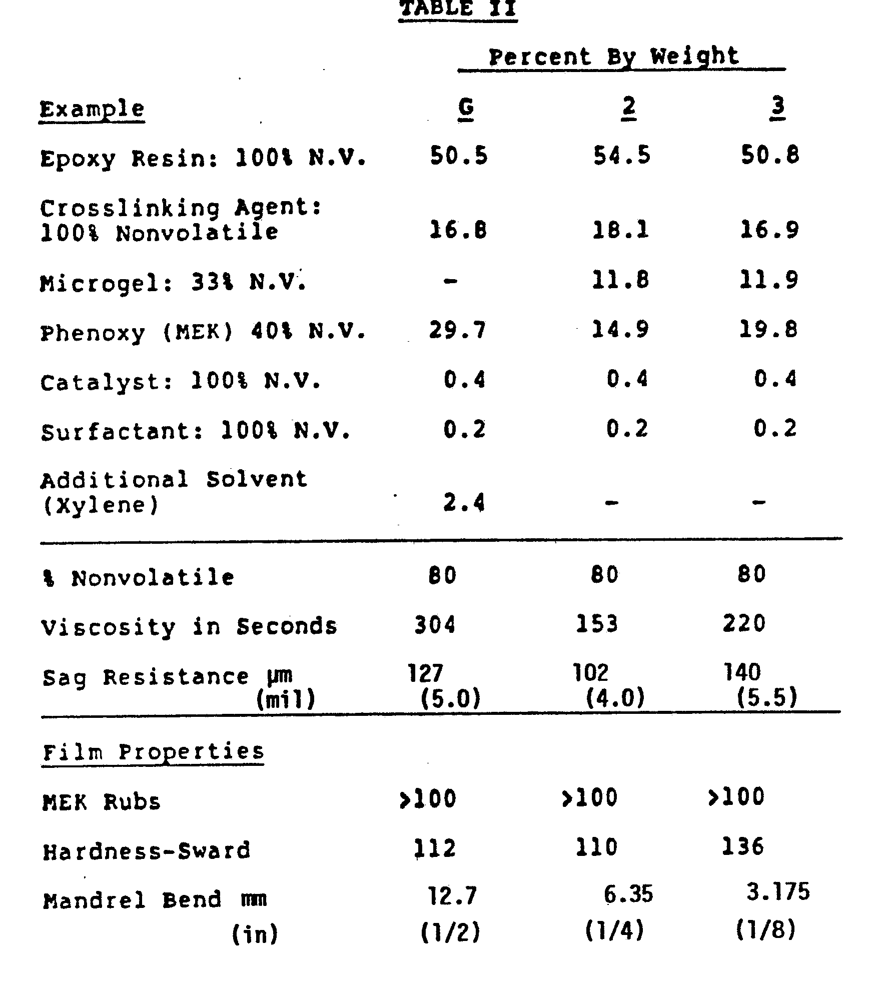

Table II illustrates the synergistic effect of using acrylic microgels in combination with high molecular weight phenoxy resins to control sag. Example _{G} illustrates the results obtained using a high molecular weight phenoxy resin in the absence of a microgel. Sag resistances of all three coatings made in Examples G, 2 and 3 are at the same general level but viscosities of the coating compositions of Examples 2 and 3 are substantially lower than that of the coating composition of Example G. Thus, the addition of a high molecular weight phenoxy resin and a microgel to the epoxy system not only improves sag but maintains viscosity at a relatively manageable level. Moreover, the film properties of the cured coatings are improved in Examples 2 and 3 over the cured coating of Example G when comparing the results of the mandrel bend test. The coating composition of Example 3 contains amounts of epoxy resin substantially equivalent to those of Example G and had a better sag resistance and a lower viscosity and produced cured coatings of much better mandrel bend and Sward hardness properties than obtained from the coating compositions of Example G.

### Examples H, K and 4-10

In each example, the epoxy resin and crosslinking agent were mixed in the proportions given in Table III to provide a uniform mixture. In each of Examples 4-10, a vinyl resin as identified in Table III in each case was dissolved in methyl ethyl ketone to provide a solution containing 40% nonvolatiles. The resulting vinyl resin solutions and the microgel were then mixed in the proportions listed in Table III with the epoxy resin and crosslinking agent mixture. In the case of Examples H and K, no microgel or vinyl resin was added but instead the CAB resin, or VAGH vinyl resin, identified above was dissolved in methyl ethyl ketone to produce a 40% nonvolatiles solution and the resulting solution was mixed with the epoxy resin-crosslinking agent mixture. In each of Examples H, K and 4-9, a catalyst and surfactant and a solvent in the case of Examples H, K and 10 as shown in Table III, were added to each mixture of said examples. All mixtures were blended to provide uniform coating compositions.

The viscosity and sag resistance of the coating composition of each example were measured and are respectively given in Table III. The sag resistance tests were carried out by applying the coating compositions of each example to aluminum panels and were drawn down to different mil thicknesses using a Leneta bar. Each coated panel was allowed to set in horizontal position for 10 minutes at ambient temperature and then was heated in vertical position in an oven at 165°C for 10 minutes. Thereafter, the thickest coating to show no sag for each composition was identified and the thickness was recorded and is presented in Table III. Thereafter, additional amounts of each coating composition of each example were applied to aluminum panels and cured thereon at 121°C for 30 minutes. The film properties of each cured coating were measured and the results are listed in Table III.

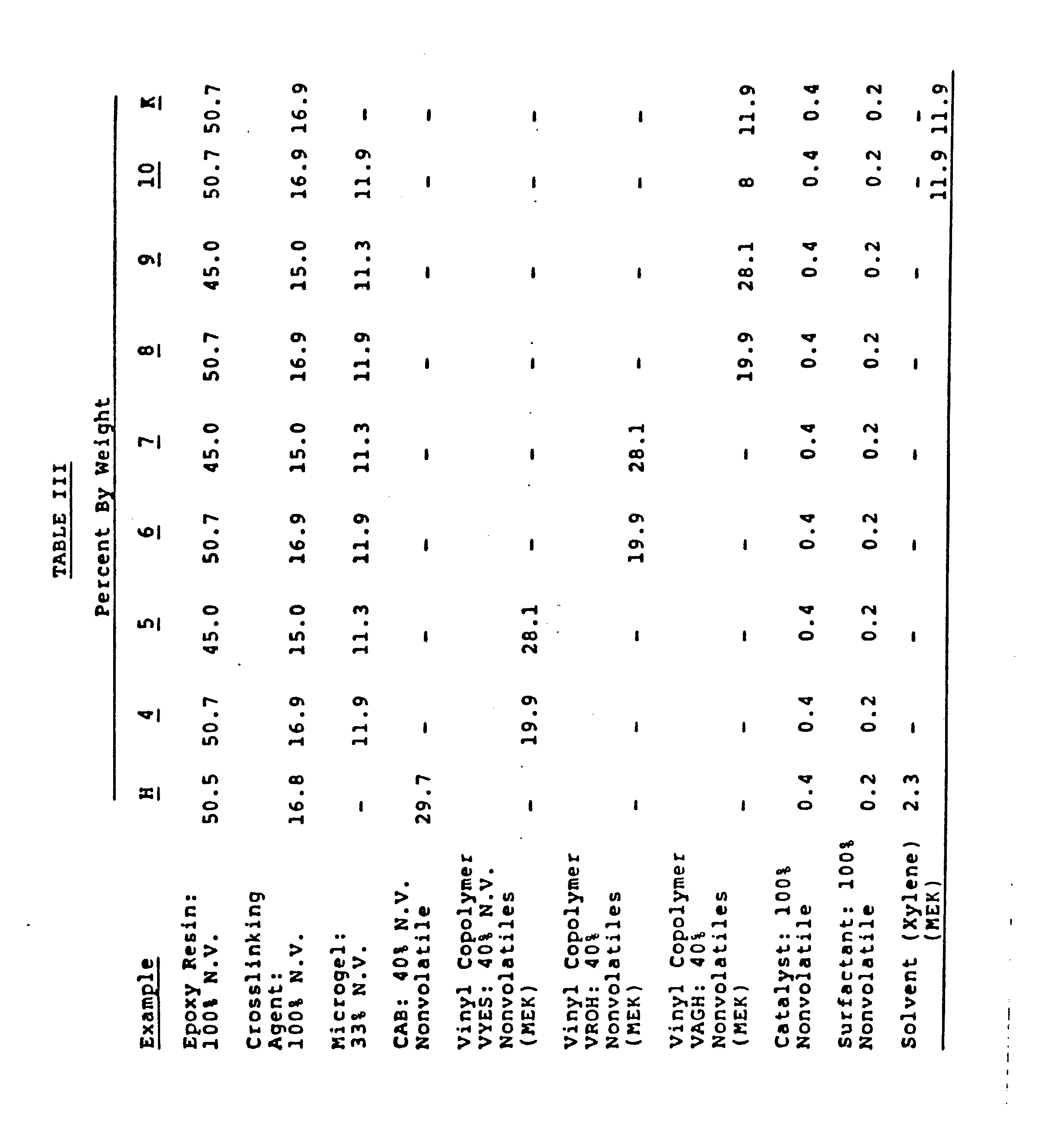

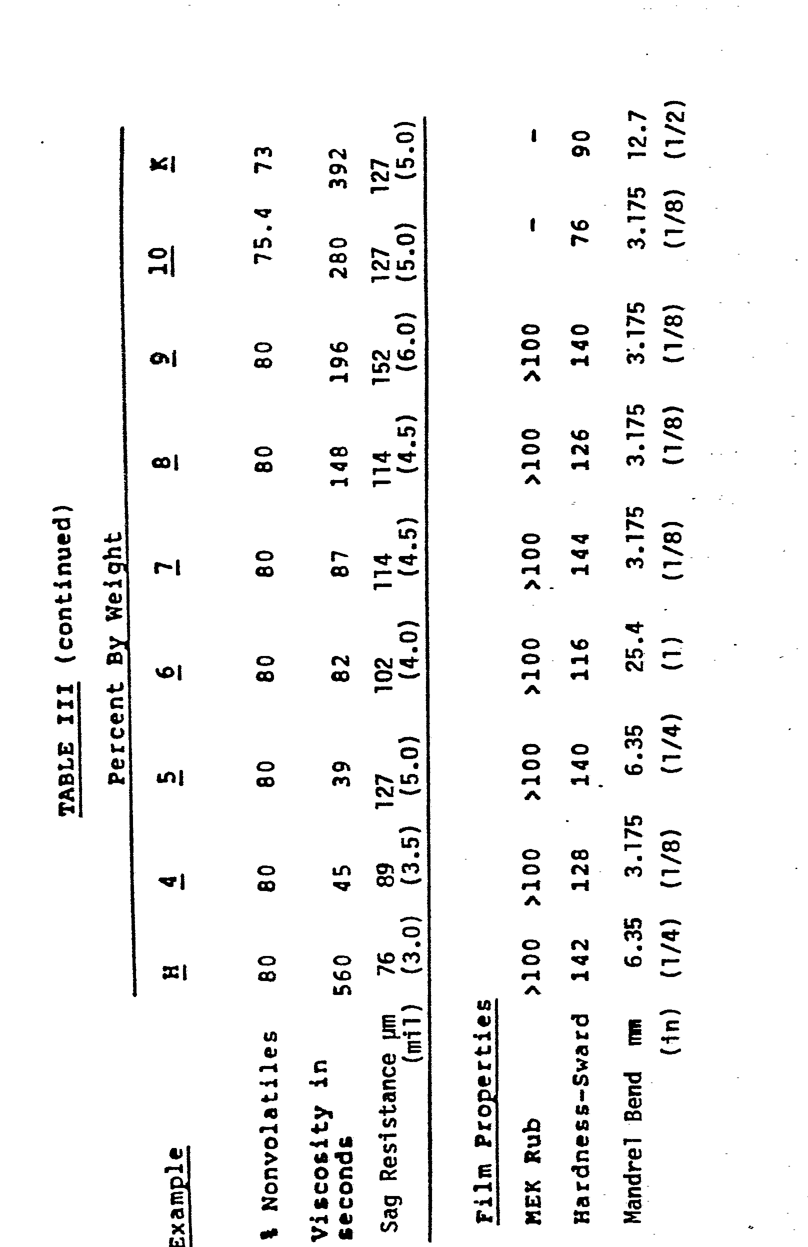

Table III demonstrates the superiority of the present invention over the heretofore employed technique of using high molecular weight polymers, e.g., cellulose acetate butyrate, as sag control additives to cycloaliphatic epoxy coating systems. Example H, using a high molecular weight cellulose acetate butyrate as a sag control additive provided a coating composition having marginal sag control, i.e. 3, and an unacceptably high viscosity, i.e., 560 seconds. Example K used the same vinyl polymer as Examples 8 and 9 and had a satisfactory sag resistance but an unacceptable viscosity, demonstrating that it is possible to provide good sag resistance but at the sacrifice of acceptable viscosity. Each of Examples 4 to 9 provided coating compositions having much lower viscosities, 196 seconds or less, and, in each case, a better sag resistance which in the case of Example 9 was 6, double that of Example H.

### Examples 11 and 12

These examples illustrate coating compositions containing no flexibilizing agents. Using procedures described in the previous examples, a 40 wt. % solution of C_{AB}-551-0.2 in methyl.ethyl ketone is prepared for Example 11 and a 40 wt. % solution of phenoxy resin PKHH in methyl ethyl ketone is prepared for Example 12: On a nonvolatile basis, in Example 11, 85 wt. parts of the epoxy resin are mixed thoroughly with 10 wt. parts of CAB-551-0.2 (25 wt. parts of the 40 wt. % solution) and 5 wt. parts of the acrylic microgel (15 wt. parts of the 33 wt. % solution). On a nonvolatiles basis, in Example 12, 85 wt. parts of an epoxy resin are mixed thoroughly with 10 wt. parts of phenoxy resin PKHH (25 wt. parts of the 40 wt. % solution) and 5 wt. parts of the acrylic microgel (15 wt. parts of the 33 wt. % solution). In addition, 0.4 wt. parts of catalyst and 0.2 wt. parts of silicone surfactant are added to each mixture. The resulting mixtures are made as uniform as possible by stirring and can be applied to and cured on a substrate with or without first adding a crosslinking agent.

## Claims

1. A thermosetting, tag-resistant coating composition comprising at least 50 wt. % nonvolatiles comprising:
(a) a crosslinkable cycloaliphatic epoxy containing at least one cycloaliphatic ring,
(b) a crosslinking/chain-extending agent compatible with and capable of crosslinking and/or chain-extending said epoxy,
(c) a sag control system comprising:
(1) an acrylic microgel, and
(2) an organic polymer having a glass transition temperature of at least 25°C, and
(d) a catalyst in an effective amount.

2. The composition of claim 1 comprising:
(a) 100 weight parts of the cycloaliphatic epoxy containing at least one cycloaliphatic ring,
(b) 0 to 300 weight parts of the crosslinking/chain-extending agent compatible with and capable of crosslinking and/or chain-extending said epoxy,.and
(c) the sag control system comprising,
(1) 2 to 15 weight parts of an acrylic microgel,
(2) 5 to 35 weight parts of an organic polymer having a glass transition temperature of at least 25°C and
(d) the catalyst in an effective amount.

3. Composition as claimed in claim 1 or 2 wherein the epoxy is 3,4-epoxycyclohexylmethyl-3,4-epoxycyclohexylcarboxylate.

4. Composition as claimed in claim 2 wherein the crosslinking agent is a polyol.

5. Composition as claimed in claim 4 wherein the crosslinking agent is also a flexibilizing agent.

6. Composition as claimed in claim 4 or 5 wherein the polyol is a polycaprolactone polyol having an average molecular weight of from 290 to 6,000 and an average hydroxyl number of 15 to 600.

7. Composition as claimed in claim 6 wherein the polycaprolactone has an average molecular weight of about 900 and an average hydroxyl number of about 187.

8. Composition as claimed in claims 1 to 7 wherein the organic polymer is an alkanoic acid ester or mixed ester of cellulose , a phenoxy resin or a vinyl polymer, preferably a terpolymer of vinyl chloride, vinyl acetate, and a hydroxy-containing monomer.

9 . Composition as claimed in claims 1 to 8 wherein the acrylic microgel comprises highly crosslinked acrylic polymer particles each having an average diameter of 0.05 to 0.2 µm blended with an acrylic solution polymer.

10 . Composition as claimed in claims 1 to 9 further comprising a Lewis acid catalyst.

11 . Composition as claimed in claims 1 to 10 wherein the catalyst is an onium salt catalyst, preferably diethylammoniumtriflate.

12. Composition as claimed in claims 1 to 11 further comprising a silicone surfactant.

13 . Composition as claimed in claim 2 comprising at least 50 weight percent nonvolatiles comprising:
(a) 100 weight parts of the crosslinkable' cycloaliphatic epoxy,
(b) 25 to 40 weight parts of the crosslinking/chain-extending agent,
(c) 5 to 10 weight parts of the acrylic microgel, and
(d) 7 to 30 weight parts of the organic polymer.

14. A sag control mixture for controlling sag in cycloaliphatic epoxy coatings comprising.:
(a) an acrylic microgel, and
(b) an organic polymer having a glass
transition temperature of at least 25°C, according to claims 1 to 13 in a weight ratio of the microgel to the polymer in the range from 1:4 to 4:1, preferably 1:1 to 1:3.
